Europäisches Patentamt

European Patent Office

Office européen des brevets

(19)

(11) Publication number: **0 337 472**
**A2**

(12) **EUROPEAN PATENT APPLICATION**

(21) Application number: **89106649.0**

(51) Int. Cl.4: **C01G 25/02**

(22) Date of filing: **13.04.89**

(30) Priority: **14.04.88 IT 2019588**

(43) Date of publication of application:
**18.10.89 Bulletin 89/42**

(84) Designated Contracting States:
**BE DE FR GB NL SE**

(71) Applicant: **ISTITUTO GUIDO DONEGANI S.p.A.**
**Via Caduti del Lavoro**
**I-28100 Novara(IT)**

(72) Inventor: **Balducci, Luigi, Dr.**
**1, Piazza Italia**
**I-27036 Mortara, Pavia(IT)**
Inventor: **Gherardi, Paola, Dr.**
**28, Via Turbigo**
**I-28067 Pernate, Novara(IT)**
Inventor: **Pelosini, Luigi**
**8, Via A. Volta**
**I-28010 Fontaneto d'Agogna Novara(IT)**

(74) Representative: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**D-8000 München 40(DE)**

(54) **Process for preparing submicronic powders of zirconium oxide stabilized with yttrium oxide.**

(57) A process for preparing submicronic powders of zirconium oxide stabilized with yttrium oxide, by hydrothermal precipitation from solutions of zirconyl ions optionally containing yttrium ions and subsequent basification and calcination of the obtained hydrated oxides. The stabilizing yttrium ions may alternatively be added after hydrothermal precipitation of the hydrated zirconium oxide and before basification.

EP 0 337 472 A2

# PROCESS FOR PREPARING SUBMICRONIC POWDERS OF ZIRCONIUM OXIDE STABILIZED WITH YTTRIUM OXIDE

The present invention relates to a process for the production of submicronic powders of zirconium oxide stabilized with yttrium oxide, by thermal hydrolysis of acidic solutions containing zirconyl and yttrium ions, subsequent basification and calcination of the obtained hydrated oxides.

It is well known that the physical and mechanical properties of ceramic materials based on $ZrO_2$ may be widely modified by the presence of oxides, such as, for instance, Mg, Ca, Ce, Al, Y oxides, which form solid solutions with a tetragonal or cubic structure with zirconium dioxide.

Depending on the nature of the modifying element, the crystalline structure of the product and the sintering conditions the zirconium dioxide powders can be used for the preparation of a large number of articles, such as, for instance, components for endothermic motors, nozzles for the extrusion of metals, bearings, and sensors for controlling combustion and moisture.

Such powders are used in particular for the manufacture of edged tools, such as for instance scissor-blades and knives.

A group of materials which is characterized by high toughness is represented by zirconium dioxide containing from 1.5 to 3.5% by moles of $Y_2O_3$; these compounds, which are known in literature by their initials TPZ (tetragonal polycrystalline zirconia), have a tetragonal structure. The corresponding ceramic products show a small grain size, below 1 $\mu$m.

The powders containing higher percentages of yttrium, on the contrary, have a cubic structure.

A traditional process for preparing powders based on stabilized zirconium dioxide comprises the calcination of a mixture containing $ZrO_2$ and the oxide of the modifying element, as de scribed, for instance, in US-A- 4,205,051 and in EP-A-26,666. This process is not very expensive, but it generally leads to ceramic materials which have poor properties, since the blending in the solid state does not always result in a homogeneous distribution of the modifying element in the zirconium dioxide matrix.

Another method for producing stabilized zirconia uses coprecipitation and decomposition; according to this method salts of zirconium and of the stabilizing element are precipitated from solutions, whereafter said salts are decomposed to form the oxides. This method, described, for instance, in JP-A-59-078,928 and JP 60-171,223 allows to prepare fine powders; the calcination step, however, requires high temperatures, which may cause agglomeration of the powders, wherefore a subsequent grinding operation becomes necessary which operation may result in the introduction of impurities.

Another known method for producing stabilized zirconia consists in the chemical vapor phase decomposition of chlorides or organometallic compounds of zirconium and the stabilizing element, as described, for instance, in K. Mazdiyasni, C.T. Lynch, C.R. Journees Etud. Solides Finement Div., 1967 (pb. 1969), 9-28. The powders obtained by this method are generally too fine, so that they can be treated only with difficulty; moreover, due to the price of the reagents the decomposition in vapor phase is a very expensive process.

Another method of the prior art is the sol-gel method, wherein alcoholates of zirconium and the modifying element are polymerized and subsequently heated to provide the oxide. A sol-gel preparation method is described in R.G. Wymer et al., Proc. British Ceram. Soc., 7, 61, 1967. The drawback of this method consists in the considerable amount of water that is chemiabsorbed by the powder particles, which makes it impossible to obtain ceramic materials having a high density after compaction. Also in this case rather expensive starting materials have to be used, for instance alcoholates of zirconium and of the modifying element.

Another method which is less expensive and is generally used consists in the coprecipitation of hydroxides of zirconium and of the modifying element from aqueous solutions of the corresponding metals by cold basification, as described, for instance, in US-A-4,619,817 and in JP-A-57-191,234 and 58-135,131; thereafter the product is subjected to a thermal treatment to obtain the desired crystalline form. The general drawback of this method is that it does not allow to sufficiently control the granulometry of the precipitated hydroxide, which consequently amorphous and gelatinous, has an indefinite morphology and consists of coacervated particles.

In other processes of the prior art the precipitation of the modifying element is carried out in the form of a hydroxide, in the presence of a substrate consisting of zirconium oxide or hydroxide. This process, for instance, is described in JP-A-59-227,725, 60-51617, 59-232,920 and in EP-A-194,191. When such a zirconium oxide is used as substrate, careful dispersion is necessary which involves consumption of considerable amounts of energy and time.

It has unexpectedly been found that high-quality powders of zirconium oxide, stabilized with yttrium oxide, can be produced by a comparatively inexpensive process. Said powders do not show the above mentioned drawbacks and allow the production of ceramic materials having high density and good mechanical characteristics, particularly suitable for the above described applications.

Therefore, one object of the present invention is a process for preparing submicronic and unaggregated particles of hydra ted zirconium oxide and of yttrium hydroxide, which comprises:

a) hydrothermal precipitation by heating an acidic aqueous so lution containing zirconyl ions, in the presence or absence of stablizing yttrium ions, at a temperature ranging from the boiling temperature of the mixture to 250°C; and

b) basifying the dispersion up to a pH of at least 8.5, after addition of stabilizing yttrium ions, if they are not already present in step a).

A further object of the invention is a process for preparing submicronic and unaggregated powders of zirconium oxide, stabilized with yttrium oxide, comprising:

a) hydrothermal precipitation by heating an acidic aqueous so lution containing zirconyl ions, in the presence or absence of stabilizing yttrium ions, at a temperature ranging from the boiling temperature of the mixture to 250°C;

b) basifying the dispersion up to a pH of at least 8.5, after addition of stabilizing yttrium ions, if they are not already present in step a); and

c) subjecting the hydrated zirconium oxide and yttrium hydroxide to a calcination at temperatures ranging from about 750 to about 1100°C.

Step a) is generally carried out for a period of time sufficient for obtaining, by hydrolysis, a dispersion containing hydrated zirconium oxide in amounts not below 90% by weight, calculated on zirconium.

By the process of the present invention submicronic and unaggregated particles of hydrated zirconium oxide and of yttrium hydroxide can be obtained, which are suitable for the production of ceramic powders having a tetragonal or cubic crystalline structure. Such particles generally have an average size below 0.5 $\mu$m, preferably not higher than 0.2 $\mu$m.

The process of the present invention allows, in particular, to obtain submicronic powders of zirconium oxide stabilized with yttrium oxide which have a tetragonal and/or cubic crystalline structure, an average particle size of not more than 0 2 $\mu$m and a specific surface area not below 10 $m^2$/g.

Such powders, not subjected to any mechanical treatment for disaggregation (for instance grinding) and after compaction and sintering at 1350°C for 1 h, show a density not below 92% of the theoretical density, and preferably not below 95% of the theoretical density. According to the prior art such density values can only be obtained by sintering powders of zirconia stabilized at temperatures above 1350°C; this shows the high reactivity of the powders obtainable by the process of the present invention.

The starting solution may be prepared by dissolving a zirconium salt in water, thereby obtaining an acidic solution having a zirconium concentration of from 0.1 to 1.0 M, preferably from 0.2 to 0.6 M. The pH of said acidic solution is generally below 0.3.

Any zirconium salt soluble in water can be used as zirconium salt. It is, however, preferred to use zirconyl chloride.

When the stabilizer is present in step a), yttrium is added to the solution thus prepared, in the form of a salt or of a relatively concentrated mother solution, in such amounts that the yttrium concentration ranges from 1 to 15%, preferably from 3 to 12%, expressed as percentage by weight of yttrium oxide in the calcined final product.

As yttrium compounds all salts which are soluble in the acidic zirconium solution and whose anion does not lead to insoluble products in the reaction medium may be used. Examples of said salts are the chloride and oxide, the chloride being preferred.

The hydrolysis is carried out at a temperature ranging preferably from 130° to 200°C, more preferred from 140° to 180°C and still more preferred from 140° to 160°C.

The time required for the hydrolysis step generally ranges from 1 to 6 hours and is a function of the hydrolysis temperature; for instance, when operating at 140°C heating is usually carried out for 3 to 5 hours, whereas by operating at 200°C it is sufficient to heat for 1 to 2 hours in order to achieve the precipitation of hydrated zirconium oxide in the amount indicated above.

It is to be noted that a too short hydrolysis results in precipitates which, after basification, show a morphology and size which are not homogeneous.

The hydrolysis reaction is preferably carried out at autogeneous pressure.

The heating of the solution is preferably carried out in such a way that the nucleation of the product does not occur before the hydrolysis temperature is reached in order to obtain a more uniform

3

granulometric distribution of the particles. The higher the hydrolysis temperature, the shorter the required heating time; for hydrolysis temperatures above 150°C the heating time is generally less than 1 hour.

Preferred operating conditions, particularly from the viewpoint of obtaining average particle sizes of the produced hydrated zirconium oxide-yttrium hydroxide of at most 0.2 μm, are: hydrolysis temperature of 140°C and concentration of the zirconium solution not higher than 0.5 M, preferably ranging from 0.2 to 0.3 M.

The basification step is carried out by addition of any desired alkaline solution; aqueous solutions of ammonia are generally used and their concentration is not critical. The base is added until a pH of at least 8.5 is reached. Generally the pH ranges from 8.5 to 9.5, preferably from 9.0 to 9.1.

A basic pH is necessary for a complete precipitation of yttrium, independent of whether said stabilizing ions are added in step a) or in step b).

The basification time generally is longer than 10 minutes; the basification is usually carried out for about 1 hour in order to stabilize the pH. For the pH stabilization the dispersion is suitably kept under stirring for more than 15 minutes.

At the end of the basification, the product is filtered and washed to remove the soluble salts. To make the filtration operation easier, anionic polyelectrolytes, which are usually employed for the flocculation of solids and which are known to the expert such as, for instance, ECOCLAR® and PRAESTOL®, may be added.

A washing with alcohol can follow the washing with water; ethyl alcohol is generally used in order to obtain, after drying, a soft and disaggregated powder, which can easily be processed.

The drying step can be carried out either under vacuum or at atmospheric pressure.

Drying is generally accomplished at temperatures of about 60°C under vacuum or at about 110°C at atmospheric pressure.

The filter cake can directly be subjected to a thermal treatment.

The precipitate obtained after basification consists of submicronic and spheroidal particles of hydrated zirconium oxide and yttrium hydroxide; the product, after washing with water, with alcohol and drying under vacuum at 60°C for 5 hours and treatment at 900°C for 1 hour, generally shows a weight loss of not more than 15%.

The particle size of the product obtained after basification is preferably below 0.2 μm; such particles display a microporous structure.

The specific surface area of said particles, determined by the B.E.T. (Brunaner, Emmett and Teller) method, of samples dried at 60°C under vacuum for 5 hours and subsequently under vacuum at 180°C usually ranges from 100 to 250 $m^2$/g.

The calcination may be carried out in air, under static conditions, either in a rotary or in a roller furnace; the preferred calcination temperatures range from about 850°C to about 1000°C.

Under these conditions the products containing not more than 6% by weight of $Y_2O_3$, based on the final product, display a tetragonal crystalline structure. The products containing amounts of $Y_2O_3$ of more than 6% by weight have a cubic structure.

The crystallite size, determined by means of X rays, usually ranges from 20 to 50 nm.

The heating rate may generally range from 150°C/h to 500°C/h.

The period of time for which the products are kept at the calcination temperature may range from about 30 minutes to about 5 hours and depends on calcination temperature and heating rate. When operating at 750°C the calcination time is generally longer than 3 hours; by operating at 1000°C it is even possible to calcine for a period of time of less than 1 hour.

The calcination can also be carried out only for the period of time required to reach the calcination temperature, namely the period of time determined by the heating rate; in this case the heating rate is preferably not higher than 350°C/h.

For preparing a ceramic article with good mechanical performance, the calcined product, although being characterized by a high reactivity, is generally subjected to further treatments designed to avoid compaction defects during the dry pressing step.

As it is a matter of weakly aggregated powders, the pollution caused by the subsequent processing is negligible.

Among the known techniques, the preferred involves the preparation of an aqueous dispersion of the product and the drying thereof by means of a spray drier.

The aqueous dispersion can be prepared by means of e.g. a ball or vibrator mill, attritor mill and quickly dispersing apparatuses, in the presence or absence of dispersants or stabilizers. In the case of powders, object of the invention, the dispersion process, by means of supersonic probes, proved to be suitable; such an operation can be carried out either batchwise or continuously.

Although the conditions of the formulation of the product (kind and amount of dispersant, binder, lubricant) and the sintering cycle of the powders had not yet been optimized the specimens, obtained by dry pressing and subsequent sintering, showed values of mechanical flexural strength (four point method) above 800 MPa, with variation coefficients of not higher than 10%.

The sintered specimens, tested with a scanning electronic microscope (SEM) after thermal etching of the surfaces, had a homogeneous microstructure with grains having a size below 0.5 $\mu$m.

The following examples are by way of illustration but not of limitation, of the present invention.

## Example 1

4000 ml of 0.5 M solution of $ZrOCl_2$, prepared by dissolving the corresponding amount of $ZrOCl_2.6H_2O$ and containing 38 g of dissolved $YCl_3.6H_2O$ (purity 99%) were introduced into an enamelled autoclave (actual capacity 5 l), equipped with a stirrer.

The solution was heated to 150°C within 1 hour; the temperature was kept at 150°C for 5 hours.

The aqueous dispersion, after having been cooled, was basified at a temperature of 25°C by means of a solution of $NH_3$, having an approximately 4.0 molar concentration, up to a pH of 9 within 50 minutes. Thereafter said dispersion was treated with 600 ml of a solution of anionic flocculation agents, ECOCLAR® 8002, having a concentration of 0.5 g/l.

The product was filtered, washed with water in order to remove salts and washed with ethyl alcohol to remove the imbibed water.

The product was dried under vacuum at 60°C for 6 hours.

The specific surface area of the dried product, determined by B.E.T., was 140 $m^2/g$.

The dried powder was calcinated in a muffle under static conditions for 30 minutes at 900°C (heating rate 150°C/h).

After calcination a weight loss of 13% was observed.

The amount of Y present in the final product was 5.4% by weight of $Y_2O_3$ based on the total amount. The specific surface area of the calcined product was 21.6 $m^2/g$; the crystallite size was 31.5 nm and the crystalline structure was tetragonal.

The calcined product, which was not subjected to any mechanical treatment for disaggregation, after compaction in a mold (diameter 3 cm) at a pressure of 500 $kg/cm^2$ and sintering at 1350°C for 1 hour, had a density which corresponded to 97% of the theoretical density.

## Example 2

Example 1 was repeated, using a starting concentration of the zirconyl chloride solution of 0.3 M and leaving the Zr/Y molar ratio unchanged.

The specific surface area of the dried product was 123 $m^2/g$. The product, after calcination according to example 1, showed a weight loss of 12.8%.

The crystalline structure of the calcined product was tetragonal, its specific surface area was 21.4 $m^2/g$.

The density of a piece sintered according to example 1 was 98% of the theoretical density.

## Examples 3 to 7

Example 1 was repeated, changing concentration of zirconyl chloride, temperature and hydrolysis time, as set forth in Table 1. Yttrium was added in amounts such as to always obtain a final product containing 5.4% by weight of $Y_2O_3$, based on the total amount.

TABLE 1

| EXAMPLE | ZIRCONIUM CONCENTRATION (M) | HYDROLYSIS TEMPERATURE (°C) | HYDROLYSIS TIME (hour) |
|---------|------------------------------|------------------------------|------------------------|
| 3 | 0.25 | 140 | 5 |
| 4 | 0.76 | 200 | 1 |
| 5 | 0.25 | 200 | 5 |
| 6 | 0.76 | 200 | 5 |
| 7 | 0.25 | 160 | 5 |

The obtained results are set forth in Table 2, wherein T = tetragonal.

TABLE 2

| EX. | SPECIFIC SURFACE AREA OF THE HYDRATED OXIDES ($m^2$/g) | CRYSTALLINE STRUCTURE OF THE CALCINED PRODUCT | SPECIFIC SURFACE AREA OF THE CALCINED PRODUCT ($m^2$/g) | DENSITY OF THE SINTERED PRODUCT (% OF THEORY) |
|---|---|---|---|---|
| 3 | 108 | T | 21.0 | 97 |
| 4 | 201 | T | 23.7 | 96 |
| 5 | 129 | T | 24.4 | 92 |
| 6 | 203 | T | 24.4 | 94 |
| 7 | 119 | T | 20.8 | 94 |

EP 0 337 472 A2

Examples 8 to 15

Example 1 was repeated, changing calcination temperature $T_c$, calcination time $t_c$ at temperature $T_c$ and heating rate $R_H$ as shown in Table 3.

TABLE 3

| EXAMPLE | $T_c$ (°C) | $t_c$ (hours) | $R_H$ (°C/h) |
|---------|-----------|---------------|-------------|
| 8 | 800 | 0 | 150 |
| 9 | 900 | 0 | 150 |
| 10 | 800 | 2 | 150 |
| 11 | 800 | 0 | 350 |
| 12 | 900 | 2 | 150 |
| 13 | 900 | 0 | 350 |
| 14 | 800 | 2 | 150 |
| 15 | 900 | 2 | 350 |

The obtained results are set forth in Table 4.

TABLE 4

| EXAMPLE | CRYSTALLITE DIAMETER (nm) | SPECIFIC SURFACE AREA OF THE CALCINED PRODUCT ($m^2$/g) | DENSITY OF THE SINTERED PRODUCT (% OF THEORY) |
|---------|---------------------------|------------------------------------------------|-----------------------------------------------|
| 8 | 22.5 | 28.8 | 98 |
| 9 | 28.5 | 21.6 | 98 |
| 10 | 25.0 | 25.2 | 98 |
| 11 | 21.0 | 29.1 | 97 |
| 12 | 36.5 | 17.7 | 96 |
| 13 | 26.5 | 22.7 | 94 |
| 14 | 26.0 | 23.7 | 95 |
| 15 | 36.0 | 17.8 | 96 |

Examples 16 to 23

Example 1 was repeated, using a starting concentration of the solution of zirconyl chloride of 0.25 M, while changing the calcination temperature, calcination time and heating rate as in examples 8 to 15 respectively.

The obtained results are set forth in Table 5.

TABLE 5

| EXAMPLE | CRYSTALLITE DIAMETER (nm) | SPECIFIC SURFACE AREA OF THE CALCINED PRODUCT ($m^2/g$) | DENSITY OF THE SINTERED PRODUCT (% OF THEORY) |
|---|---|---|---|
| 16 | 22.5 | 29.0 | 95 |
| 17 | 29.0 | 24.1 | 94 |
| 18 | 26.5 | 26.1 | 96 |
| 19 | 20.0 | 29.5 | 99 |
| 20 | 38.0 | 20.1 | 97 |
| 21 | 26.0 | 24.9 | 94 |
| 22 | 25.0 | 26.4 | 95 |
| 23 | 37.0 | 20.5 | 96 |

Example 24

200 l of a 0.5 M zirconyl chloride solution and 1.82 kg of yttrium chloride hexahydrate ($YCl_3.6H_2O$) were placed into an enamelled autoclave (capacity 300 l), equipped with a mechanical anchor stirrer and a heating jacket.

The solution was heated, under stirring (30 RPM), to 140°C within 1 hour and kept at this temperature for 4 hours; at the end, after cooling to 40°C, the basification of the dispersion was carried out up to a pH of 9 by addition of an aqueous solution of $NH_3$ (23% by weight). After having stabilized the pH (after about 30 minutes), 45 l of a solution containing 0.5 g/l of ECOCLAR® 8105 were added.

The product, after flocculation, was centrifuged and washed by centrifugation with demineralized water; it showed, according to a determination with a transmission electronic microscope (T.E.M.), an average diameter of 0.15 μm.

The centrifugation cake (28 kg corresponding to 12 kg of calcined product), was placed on mullite trays and calcined directly in a roller furnace at a temperature of 1000°C for 1 hour with a heating time of 2 hours.

The calcined product had the following physico-chemical characteristics:
- crystalline structure: tetragonal
- crystallite size: 48 nm
- specific surface area (B.E.T.): 10.2 $m^2/g$
- true density: 6.0g/$cm^3$
- % $Y_2O_3$: 5.2
- $Cl^-$: 300 ppm

The product, after having been compacted (500 kg/$cm^2$) and sintered at 1350°C for 1 hour, had the following properties:
- density of compacted product: 42% of theoretical density
- density of sintered product: 94% of theoretical density

For preparing the specimens intended for carrying out the measurements of mechanical properties, the product was dispersed in water (40% by weight of solids) by means of a supersonic probe in the presence of 0.5% of an additive based on polyvinyl alcohol (OPTAPIX PA 4G®). After completion of the dispersion the mean diameter, corresponding to 50% by weight of the particles and corresponding to 84% by weight of the particles, measured by analyzer SHIMADZU model SA-CP3, was 0.16 μm and 0.30 μm, respectively.

Thereafter the product was dried in a spray drier.

110 g of powder were pressed in a unidirectional press (200 kg/$cm^2$) in a mold having a square shape (surface 49 $cm^2$), and thereafter in an isostatic cold press (2000 kg/$cm^2$).
- Density of the specimen: 52% of theoretical density.

The sintering was carried out according to the following cycle:
- Heating up to 800°C: 20°C/h
- Stay time at 800°C: 2 h
- Heating up to 1500°C: 100°C/h
- Stay time at 1500°C: 2 h
- Cooling: 100°C/h

The density of the sintered product was 99% of the theoretical density.

The sintered product was cut, with a diamond blade (grain 150 μm), in bars (3x4x50 mm) whose corners were subsequently chamferred manually on a diamond disk (grain 15 μm).

The average resistance to bending (4 point method) was 817 MPa (variation coefficient 10%).

Example 25

The nature and amount of additives in example 24 were changed.

The dispersion of the product in water was carried out in the presence of 2% of OPTAPIX PA 4G® and of 1% of synthetic polyelectrolyte DOPAPIX® CE64.

The resistance to bending of the sintered specimens was 860 MPa (Variation coefficient 10%).

## Claims

1. Process for the production of submicronic and unaggregated particles of hydrated zirconium oxide and of yttrium hydroxide, comprising:

a) hydrothermal precipitation by heating an acidic aqueous solution containing zirconyl ions, in the presence or absence of stabilizing yttrium ions, at a temperature ranging from the boiling temperature to 250°C; and

b) basifying the dispersion up to a pH not below 8.5, after addition of stabilizing yttrium ions, if not already present.

2. Process according to claim 1, wherein step a) is carried out for a period of time sufficient for obtaining, by hydrolysis, a dispersion containing hydrated zirconium oxide in amounts of at least 80% by weight, based on zirconium.

3. Process according to any one of claims 1 and 2, wherein the aqueous solution of zirconyl ions has a concentration of from 0.1 M to 1.0 M, particularly from 0.2 M to 0.6 M, zirconium.

4. Process according to any one of claims 1 to 3, wherein the yttrium ions are added in an amount such that the yttrium concentration in the calcined final product is from 1.0 to 15, particularly 3 to 12% by weight, expressed as yttrium oxide.

5. Process according to any one of claims 1 to 4, wherein the temperature at which step a) is carried out, ranges from 130° to 200°C, particularly from 140 to 160°C.

6. Process according to claim 1, wherein the temperature at which step a) is carried out, is about 140°C and the concentration of the aqueous solution of zirconyl ions is from 0.2 to 0.5 M, the hydrolysis time ranging from 3 to 5 hours.

7. Process according to any one of claims 1 to 6, further comprising step c), wherein the hydrated zirconium oxide and yttrium hydroxide, obtained in step b), are subjected to calcination, at temperatures ranging from about 750 to about 1100°C.

8. Submicronic and unaggregated particles of hydrated zirconium oxide and yttrium hydroxide, obtainable by the process of any one of claims 1 to 7.

9. Submicronic powders of zirconium oxide stabilized with yttrium oxide, obtainable by the process of claim 7, having a tetragonal and/or cubic crystalline structure, the average particle size being at the most 0.2 μm and the specific surface area being at least 10 m²/g.

10. Use of the products according to claims 8 or 9 for the production of ceramic materials.